**Europäisches Patentamt**

**European Patent Office**

**Office européen des brevets**

(19)

(11) **EP 1 447 691 A1**

(12) **EUROPEAN PATENT APPLICATION**

(43) Date of publication:
**18.08.2004 Bulletin 2004/34**

(51) Int Cl.$^7$: **G02B 6/16**

(21) Application number: **03250904.4**

(22) Date of filing: **14.02.2003**

| | |
|---|---|
| (84) Designated Contracting States:<br>**AT BE BG CH CY CZ DE DK EE ES FI FR GB GR HU IE IT LI LU MC NL PT SE SI SK TR**<br>Designated Extension States:<br>**AL LT LV MK RO** | (72) Inventor: **Williams, John Arthur**<br>**Aston Triangle, Birmingham B4 7ET (GB)** |
| (71) Applicant: **Aston Photonic Technologies Ltd.**<br>**Birmingham B7 4BB (GB)** | (74) Representative: **Chapman, Helga Claire**<br>**Chapman Molony**<br>**Renshaw Barns**<br>**Upper Woodford**<br>**Salisbury SP4 6FA (GB)** |

(54) **Method of fabricating an optical waveguide grating and apparatus for implementing the method**

(57)     A waveguide 10 is located beside a phase mask 12, which is driven, with a ramp waveform, to undergo oscillating motion along its longitudinal axis. The phase mask 12 is illuminated with a CW UV laser beam 16, thereby generating a UV interference fringe pattern extending across the waveguide 10. The waveguide 10 moves continuously in one direction along its longitudinal axis, past the phase mask 12. Each period of the ramp waveform comprises two parts: the first part causes the phase mask 12 to move, in the same direction and at the same speed as the waveguide 10, for a distance equal to the width of the fringe pattern. As a result, the UV interference fringe pattern moves along with the waveguide 10, and a section of grating is fabricated. The second part causes the phase mask 12 to move rapidly in the opposite direction, flying back to its starting position and the next section of the grating is fabricated.

Figure 1

## Description

## Field of the invention

The invention relates to a method of fabricating an optical waveguide grating and to apparatus for implementing the method of fabricating an optical waveguide grating.

## Background to the invention

Optical waveguide gratings are fabricated by exposing a section of a waveguide to an ultra violet (UV) interference fringe pattern. The fringe pattern may be generated holographically using two interfering UV laser beams or by illuminating a phase mask with a UV laser beam. The two-beam method relies on the coherence of the two beams and is typically limited to fabricating gratings of less than 1 cm in length. The phase mask technique is limited by the ability to obtain large phase masks. Currently these are limited to less than 15 cm in length. The ability to fabricate long grating structures (length greater than 1 m) is desirable for many applications including fibre dispersion compensation where additional grating length allows larger dispersions to be compensated for, or larger operating bandwidths to be used. Optical waveguide gratings, in particular fibre Bragg gratings, are also used as sensors and the narrow reflection spectrum of a longer grating improves the sensitivity with which a measurand can be measured.

The problem then is how to fabricate gratings which are longer than available phase masks. Specifically, how to stitch a number of gratings together to make a long grating, and how to ensure correct alignment between the gratings. One technique which has been proposed to achieve this involves scanning the waveguide past the UV beam and phase mask (or scanning the beam and phase mask past the fibre) and pulsing the laser beam at the correct moment to produce phase coherence within the long grating. Another technique constructs a long grating by individually fabricating successive sections of the long grating, each section being made by scanning a UV beam across the phase mask. The same mask may be used for each section or a set of phase masks designed to fabricate a long grating having a particular structure may be used. In each case the sections must be phase aligned. In both of these techniques it is necessary to ensure that the sections of the long grating are phase coherent.

## Summary of the invention

According to a first aspect of the present invention there is provided a method of fabricating an optical waveguide grating, the method comprising the steps of:

locating an optical waveguide beside a phase mask;

oscillating the phase mask back and forth along its longitudinal axis;
illuminating the phase mask to thereby generate an interference fringe pattern which extends across the waveguide; and
moving the optical waveguide in one direction along its longitudinal axis, past the phase mask, the optical waveguide moving at the same speed as the phase mask in the said one direction, such that synchronised movement of the phase mask, the interference fringe pattern and the optical waveguide is achieved in the said one direction,
whereby by illuminating the phase mask for a time equal to m periods of the oscillation applied to the phase mask m sections of the waveguide are exposed to the interference fringe pattern, thereby fabricating an optical waveguide grating comprising m grating sections.

The longitudinal axes of the phase mask and the optical waveguide are preferably substantially parallel.
The phase mask is preferably oscillated with a ramp waveform. Preferably, the first part of each period of the ramp waveform causes the phase mask to move in the said one direction for a distance substantially equal to the width of the generated interference fringe pattern, at the same speed as the optical waveguide, and the second part of each period of the ramp waveform causes the phase mask to move in the opposite direction, returning to its starting position, at a significantly higher speed. The period of the ramp waveform is preferably equal to a multiple of the rate at which the grating periods within a fabricated grating section will move past the phase mask.
The amplitude of the ramp waveform, and thus the distance the phase mask moves in the one direction, may be increased or decreased such that the grating fringes within the optical waveguide are partially cancelled out, thereby reducing the amplitude of the grating.
The frequency of the ramp waveform may be increased or decreased, to thereby cause a gradual slippage between the period of the phase mask and the period of the grating sections within the waveguide, leading to an up or down shift in the period, and thus the resonant wavelength, of the grating being fabricated.
A variable axial strain may alternatively or additionally be applied to the optical waveguide in order to modify the resonant wavelength and/or the amplitude of the grating along its length.
The phase mask is preferably illuminated using a continuous wave ultra violet laser beam. The phase mask may alternatively be illuminated using an amplitude modulated continuous wave ultra violet laser beam, the amplitude of the laser beam being reduced, most preferably to zero, during movement of the phase mask in the opposite direction to the waveguide. The width of the laser beam is preferably less than the stitch field size of the phase mask.

The optical waveguide may be an optical fibre or may be a planar optical waveguide.

According to a second aspect of the present invention there is provided apparatus for implementing the method of fabricating an optical waveguide grating according to the first aspect of the invention.

**Brief description of the drawings**

Specific embodiments of the invention will now be described in detail, by way of example only, with reference to the accompanying drawings, in which:

Figure 1 is a diagrammatic representation of a first apparatus suitable for implementing a method of fabricating an optical waveguide grating according to a first aspect of the invention;

Figure 2 is a diagrammatic representation of the fabrication of an optical waveguide grating using the method of the first aspect of the invention;

Figure 3 is a diagrammatic representation of a second apparatus suitable for implementing a method of fabricating an optical waveguide grating according to a second aspect of the invention; and

Figure 4 is a diagrammatic representation of a third apparatus suitable for implementing a method of fabricating an optical waveguide grating according to a third aspect of the invention.

**Detailed description**

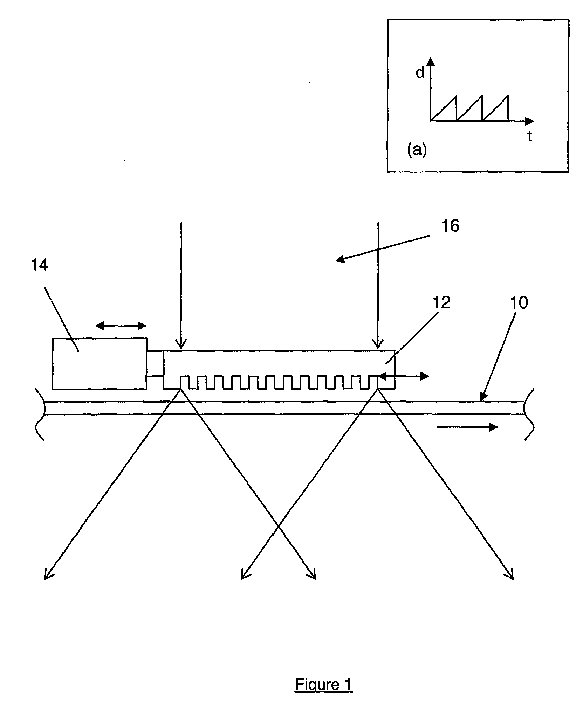

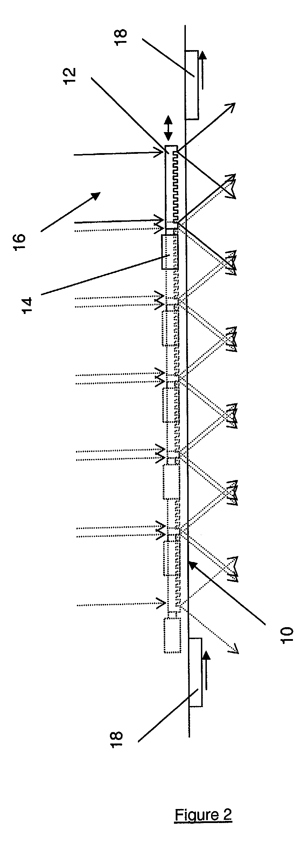

Referring to Figs. 1 and 2, a first embodiment of the invention provides a method of fabricating an optical waveguide grating, which in this example comprises a Bragg grating to be fabricated in a planar optical waveguide 10, the method comprising the following.

The waveguide 10 is located beside a phase mask 12, which in this example is a uniform period phase mask, as would occur during grating fabrication using known phase mask fabrication techniques. The waveguide 10 and the phase mask 12 are arranged such that their longitudinal axes are substantially parallel. The phase mask 12 is attached to a piezoelectric stack 14, which is driven with a ramp waveform (as shown in inset (a) in Fig. 1, where d is displacement and t is time). The resulting expansion and contraction of the piezoelectric stack 14 causes the phase mask 12 to undergo an oscillating motion, back and forth along its longitudinal axis, as will be described in more detail below.

The phase mask 12 is illuminated with a continuous wave (CW) ultra-violet (UV) laser beam 16, thereby generating a UV interference fringe pattern (not shown) which extends across the waveguide 10. The width of the laser beam 16 is less than the stitch field size of the phase mask 12, thereby avoiding discontinuities in the grating structure caused by phase mask field stitching errors.

The waveguide 10 is mounted on movably mounted linear stages 18, under the control of which it is moved continually in one direction (left to right across the page in Fig. 1) along its longitudinal axis, past the phase mask 12. The waveguide 10 moves at the same speed as the phase mask 12 in that direction, so that synchronised movement of the phase mask 12, the UV interference fringe pattern and the waveguide 10 is achieved. The relative velocities of the waveguide 10 and the phase mask 12 must be matched accurately (typically <0.1 % difference in velocity) when they move together. As a result, the UV interference fringe pattern moves along with the waveguide 10, and the intensity induced refractive index changes within the waveguide build up to form a section of grating. The skilled person will understand that any photosensitive optical waveguide may be used.

Each period of the ramp waveform driving the oscillation of the phase mask 12 comprises two distinct parts, as can be seen in the inset in Fig. 1. The first (sloping) part of each period of the ramp waveform causes the phase mask 12 to move, in the same direction as the waveguide 10, for, in this example, a distance substantially equal to the width of the UV interference fringe pattern. As mentioned previously, the phase mask 12 moves at the same speed as the waveguide 10 during this first part of the waveform. The second part of each period of the ramp waveform causes the phase mask 12 to move rapidly in the opposite direction, flying back to its starting position. Because the waveguide 10 has moved, the next section of the waveguide is then exposed to the UV interference fringe pattern.

The period of the ramp waveform is equal to a multiple of the rate at which the grating periods within a fabricated grating section move past the phase mask 12, and is given by

$$\tau_{ramp} = n \cdot \frac{v_{fibre}}{\Delta_{Bragg}}$$

where $\tau_{ramp}$ is the period of the ramp waveform, $v_{fibre}$ is the velocity of the waveguide 10 and $\Delta_{Bragg}$ is the Bragg period of the grating being fabricated within the waveguide 10. In this way consecutively fabricated sections of the grating will be in phase.

This method of fabricating an optical waveguide grating may be thought of as an optical 'ratchet' with the UV interference fringe pattern generated by the phase mask 'ratcheting' along the waveguide as it moves past, as illustrated in Fig.2. By illuminating the phase mask for a time equal to *m* periods of the ramp waveform, *m* sections of the waveguide are exposed to the UV interference fringe pattern, thereby fabricating a grating comprising *m* consecutive grating sections.

As mentioned above, while the phase mask 12 is flying back to its starting position, the waveguide 10 continues to move past the phase mask 12. This results in small gap regions within the grating, between consecutive sections of the grating, which give rise to corresponding resonances within the optical spectrum of the grating. The shorter the grating sections, the closer together the gaps within the grating will be and the further apart the corresponding resonances within the grating's optical spectrum.

The width of the UV interference fringe pattern, and thus the width of each section of the grating, is selected to be a small multiple of the grating period. The section width is generally set at between 1 and 100 grating periods. If each grating section has a length equal to a single grating period, then the imperfections will have the same period as the grating. This will cause a modification of the Bragg period waveform away from the ideal sinusoid, giving rise to error resonances in the optical spectrum at harmonics of the resonant wavelength of the grating, where they will be of no consequence. A section width of, for example, 10 periods will result in the stitch errors being further apart, so errors in the spectrum of the grating will be closer together.

The number of grating periods per section depends on how far apart from the resonant wavelength of the grating the error resonances in the spectrum are required to be. This will depend on the spectral range that the grating is being fabricated in. For example, fabricating a grating having a resonant wavelength of 1500nm from sections having a width of 100 periods will give error sidebands at 15nm from resonant wavelength i.e. 1515nm and 1485nm. By appropriately selecting the width of the grating sections the problems associated with stitching together separate gratings can be overcome.

The amplitude of the ramp waveform may alternatively be set such that the distance moved by the phase mask 12, during the first part of each period of the waveform, is less than the width of the UV interference fringe pattern. This provides the advantage that the UV interference fringe pattern exposure experienced by the waveguide 10 is averaged over many periods of the ramp waveform. As a result, no gap regions are produced within the grating, since any gaps between subsequent exposures will average out as the UV interference fringe pattern is integrated over many exposures. For example, if a phase mask 12 that generates a 1 mm wide UV interference fringe pattern, having a period of 1000nm, is driven with a ramp waveform that causes the phase mask 12 to move a distance equal to a single fringe period during each oscillation, it will require 1000 periods of the ramp waveform to move the phase mask 12 a distance equal to the width of the UV interference fringe pattern. The exposure of the waveguide is thereby averaged over 1000 ramp waveform periods, so we would expect a $\sqrt{1000}$ improvement in the gap error, since the effect of the error is averaged out.

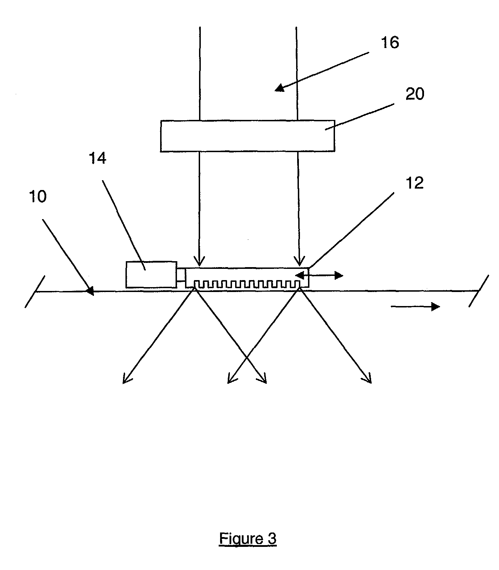

Referring to Fig.3, a second embodiment of the invention provides a second method of fabricating an optical waveguide grating. The fabrication method according to this second embodiment is substantially the same as the fabrication method according to the first method, with the following modification. The same reference numerals are retained for corresponding features.

In this embodiment, the CW UV laser beam 16 is amplitude modulated by means of an optical modulator 20 located in the path of the laser beam 16. The optical modulator 20 acts to turn the laser beam 16 off during the second part of each period of the ramp waveform, i.e. while the phase mask 12 is flying back to its starting position.

When fabricating optical waveguide gratings it is often necessary to modify the amplitude (coupling coefficient) and/or period of the grating structure along its length, in order to produce gratings that are apodised and/or chirped.

A reduction in the grating amplitude may be realised by averaging out the strength of the grating fringes within the waveguide. Using the fabrication methods according to the first or second embodiment of the present invention this is achieved by increasing or decreasing the amplitude of the ramp waveform driving the oscillation of the phase mask 12, thereby changing the distance moved by the phase mask 12 during each oscillation. As a result, the phase mask 12 moves with the waveguide for a distance greater or less than the width of the UV interference fringe pattern, causing some sections of the waveguide to undergo multiple exposures to the UV interference fringe pattern. The grating fringes within the waveguide 10 are thereby partially cancelled out, reducing the grating amplitude. The frequency of the ramp waveform remains unchanged, so as to preserve the periodicity of the grating.

An advantage of apodizing a grating using this method is that the average UV power that each section of the waveguide is exposed to is kept constant, therefore avoiding chirping of the grating period due to changes in the average propagation constant of the waveguide along the grating length. The overall UV exposure is not changed, the visibility of the UV fringes is simply reduced, and hence no chirp is produced.

A local shift in the resonant wavelength of the grating can be produced by changing the frequency of the ramp waveform driving the oscillation of the phase mask 12. This effectively allows a gradual slippage between the period of the phase mask 12 and the period of the grating fringes within the waveguide 12, leading to an up or down shift in the period of the grating in a manner analogous to Doppler shifting. The amplitude of the ramp waveform must be changed simultaneously in order to preserve the desired amplitude profile of the grating.

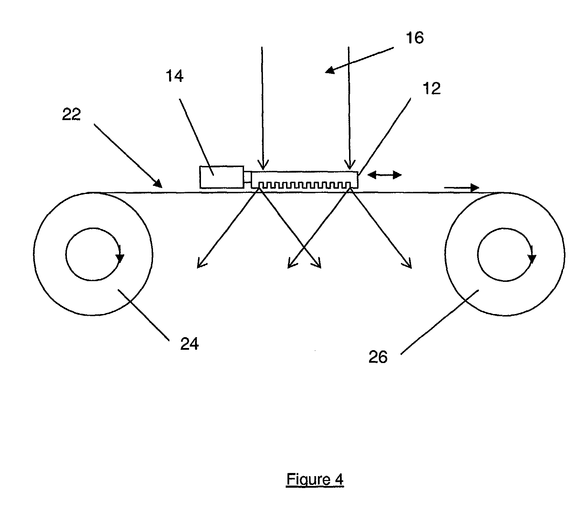

Referring to Fig.4, a third embodiment of the invention provides a third method of fabricating an optical waveguide grating, which here takes the form of a fibre Bragg grating. The method according to this embodiment is a modification of the methods provided by the first and second embodiments, and offers an alternative way in which the resonant wavelength and/or the amplitude of the grating can be modified along the grating length. The same reference numerals are retained for corresponding features.

In this embodiment a variable axial strain is applied to the waveguide, which in this example comprises an optical fibre 22, to thereby vary the tension on the fibre 22 as it moves. This effectively varies the amplitude of the ramp waveform oscillating the phase mask 12. The fibre 22 may be any known photosensitive optical fibre. The fibre 22 is attached to two rotatably mounted drums 24, 26, the length of fibre 22 in which the grating is to be fabricated extending between the two drums 24, 26. To move the fibre 22 past the phase mask 12 with a constant speed the drums 24, 26 are rotated synchronously.

The source drum 24 is provided with a variable brake (not shown) for controlling the rotational speed of the source drum 24. During exposure of the fibre 22 to the UV fringe pattern, a variable axial strain is applied to the fibre 22 by applying the brake to the source drum 24 while continuing to rotate the collector drum 26 at a constant speed. Following fabrication of a grating, the fibre 22 containing the grating is released from the drums 24, 26 and relaxes by varying amounts. As a result, the period of the grating changes as the strain within the fibre 22 is released, thus providing a variation in the resonant wavelength of the grating along its length.

The described methods of fabricating an optical waveguide grating provide the important advantage that arbitrarily long gratings can be fabricated without the need for a long phase mask, and without requiring the use of grating stitching. Long gratings can be fabricated from a plurality of shorter grating sections and consecutive sections are in phase with each other. By using grating sections which comprise a small number of grating periods, the error resonances caused by the gaps between adjacent grating sections will be far away from the resonant wavelength of the grating. In addition, the gratings can be fabricated to have a specific amplitude profile, and a specific spectral profile, thereby enabling the fabrication of grating structures that are both chirped and apodised. Local shifts in the resonant wavelength of the grating can also be produced. The skilled person will appreciate that the application of strain to the waveguide is an alternative but equivalent method of changing the amplitude of the grating to changing the amplitude of the ramp waveform.

In the described fabrication methods the UV beam need only illuminate a small part of the waveguide or fibre, therefore a small, cheap, phase mask may be used. Furthermore, if the UV beam size is smaller than the phase mask stitch field size, then the normal problems arising from the phase mask field stitching errors can also be eliminated.

Various modifications may be made without departing from the scope of the present invention. As the skilled person will appreciate, where a planar optical waveguide is described, an optical fibre may alternatively be used, and vice versa. Where the fibre is shown mounted between two drums, the drums may be replaced by linear stages, and vice versa, although the skilled person will appreciate that the drums would not be suitable for use with a planar waveguide.

The phase mask may have a different period to that described, and may alternatively have a chirped period. The phase mask may be mounted for oscillatory movement on any mechanical assembly suitable to be driven with a ramp waveform. The ramp waveform may have a different frequency and amplitude to that described. The grating may be fabricated from a different number of grating sections to that described, and the grating sections may have a different length to that described.

**Claims**

1. A method of fabricating an optical waveguide grating, the method comprising the steps of:

    locating an optical waveguide beside a phase mask;
    oscillating the phase mask back and forth along its longitudinal axis;
    illuminating the phase mask to thereby generate an interference fringe pattern which extends across the waveguide; and
    moving the optical waveguide in one direction along its longitudinal axis, past the phase mask, the optical waveguide moving at the same speed as the phase mask in the said one direction, such that synchronised movement of the phase mask, the interference fringe pattern and the optical waveguide is achieved in the said one direction,
    whereby by illuminating the phase mask for a time equal to m periods of the oscillation applied to the phase mask m sections of the waveguide are exposed to the interference fringe pattern, thereby fabricating an optical waveguide grating comprising m grating sections.

2. A method a claimed in claim 1, wherein the phase mask is oscillated with a ramp waveform, the first part of each period of the ramp waveform causing the phase mask to move in the said one direction for a distance substantially equal to the width of the generated interference fringe pattern, at the same speed as the optical waveguide, and the second part of each period of the ramp waveform causing the phase mask to move in the opposite direction, returning to its starting position, at a significantly higher speed.

3.  A method as claimed in claim 2, wherein the period of the ramp waveform is equal to a multiple of the rate at which the grating periods within a fabricated grating section will move past the phase mask.

4.  A method as claimed in claims 2 or 3, wherein the amplitude of the ramp waveform, and thus the distance the phase mask moves in the one direction, may be increased or decreased such that the grating fringes within the optical waveguide are partially cancelled out, thereby reducing the amplitude of the grating.

5.  A method as claimed in any of claims 2 to 4, wherein the frequency of the ramp waveform may be increased or decreased, to thereby cause a gradual slippage between the period of the phase mask and the period of the grating sections within the waveguide, leading to an up or down shift in the period, and thus the resonant wavelength, of the grating being fabricated.

6.  A method as claimed in any preceding claim, wherein a variable axial strain is applied to the optical waveguide in order to modify the resonant wavelength and/or the amplitude of the grating along its length.

7.  A method as claimed in any preceding claim, wherein the phase mask is illuminated using a continuous wave ultra violet laser beam.

8.  A method as claimed in claim 7, wherein the continuous wave ultra violet laser beam is amplitude modulated, the amplitude of the laser beam being reduced during movement of the phase mask in the opposite direction to the waveguide.

9.  A method as claimed in claims 7 or 8, wherein the width of the laser beam is less than the stitch field size of the phase mask.

10. A method as claimed in any preceding claim, wherein the optical waveguide is an optical fibre or a planar optical waveguide.

11. Apparatus for implementing the method of fabricating an optical waveguide grating as claimed in any preceding claim.

Figure 1

EP 1 447 691 A1

Figure 2

Figure 3

Figure 4

European Patent
Office

**EUROPEAN SEARCH REPORT**

Application Number

EP 03 25 0904

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X | YOFFE G W ET AL: "Flexible and stable interferometer for fabricating fiber Bragg gratings" BRAGG GRATINGS, PHOTOSENSITIVITY, AND POLING IN GLASS WAVEGUIDES. OSA TRENDS IN OPTICS AND PHOTONICS SERIES. VOL.33, BRAGG GRATINGS, PHOTOSENSITIVITY, AND POLING IN GLASS WAVEGUIDES. OSATRENDS IN OPTICS AND PHOTONICS SERIES. VOL.33, STUART, FL, USA, , pages 144-146, XP009013251 2000, Washington, DC, USA, Opt. Soc. America, USA ISBN: 1-55752-593-5 * page 145-146; figure 2 * | 1-5,7-11 | G02B6/16 |
| Y | * figure 2 * | 6,9 | |
| X | US 2003/007732 A1 (RONNEKLEIV,E) 9 January 2003 (2003-01-09) * page 1, paragraph 7 * | 1 | |
| Y | US 6 272 886 B1 (BALL GARY A ET AL) 14 August 2001 (2001-08-14) * column 9, line 5-40 * | 6 | TECHNICAL FIELDS SEARCHED (Int.Cl.7) G02B |
| X | KASHYAP,R: "Fiber Bragg Gratings" , ACADEMIC PRESS , USA XP002246551 | 9 | |
| Y | * page 80, line 1-3, paragraph 3.1.8 * * page 88, line 1-10, paragraph 3.1.13 * | 6 | |
| Y | OTHONOS,A: "Fiber Bragg Gratings Fund.and Appl." , ARTECH HOUSE , NORWOOD,MA,USA XP002247279 * page 159, paragraph 4.3.1 - page 159 * | 9 | |

The present search report has been drawn up for all claims

| Place of search | Date of completion of the search | Examiner |
|---|---|---|
| MUNICH | 17 July 2003 | Yenidunya, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

11

**EP 1 447 691 A1**

## ANNEX TO THE EUROPEAN SEARCH REPORT
## ON EUROPEAN PATENT APPLICATION NO.

EP 03 25 0904

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2003

| Patent document cited in search report | | Publication date | Patent family member(s) | | Publication date |
|---|---|---|---|---|---|
| US 2003007732 | A1 | 09-01-2003 | NO | 20013287 A | 30-12-2002 |
| | | | WO | 03003079 A1 | 09-01-2003 |
| US 6272886 | B1 | 14-08-2001 | AU | 1963497 A | 15-05-1998 |
| | | | CN | 1232547 A | 20-10-1999 |
| | | | DE | 69709151 D1 | 24-01-2002 |
| | | | DE | 69709151 T2 | 22-08-2002 |
| | | | EP | 0934541 A1 | 11-08-1999 |
| | | | JP | 2001502443 T | 20-02-2001 |
| | | | WO | 9818031 A1 | 30-04-1998 |
| | | | US | 2001020375 A1 | 13-09-2001 |

EPO FORM P0459

For more details about this annex : see Official Journal of the European Patent Office, No. 12/82